Europäisches Patentamt

European Patent Office

Office européen des brevets

(19)

(11) Numéro de publication: **0 169 780**
**B1**

(12) **FASCICULE DE BREVET EUROPEEN**

(45) Date de publication du fascicule du brevet:
**01.06.88**

(21) Numéro de dépôt: **85401468.5**

(22) Date de dépôt: **17.07.85**

(51) Int. Cl.⁴: **B 65 D 43/08,** B 65 D 21/02,
A 47 G 19/26, A 47 J 47/10

(54) **Bac alimentaire.**

(30) Priorité: **20.07.84 FR 8411575**

(43) Date de publication de la demande:
**29.01.86 Bulletin 86/5**

(45) Mention de la délivrance du brevet:
**01.06.88 Bulletin 88/22**

(84) Etats contractants désignés:
**AT BE CH DE FR GB IT LI LU NL SE**

(56) Documents cités:
**GB - A - 2 040 883**
**NL - C - 33 854**
**US - A - 3 995 766**

(73) Titulaire: **CIDELCEM Société Anonyme dite, 5-15, rue Olivier Noyer, F-75014 Paris (FR)**

(72) Inventeur: **Tzifkansky, Guy, 8 avenue Gabriel Péri, F-92260 Fontenay aux Roses (FR)**
Inventeur: **Marchais, Jean-Claude, 6 avenue Aristide Briand, F-94240 l'Hay les Roses (FR)**

(74) Mandataire: **Vigand, Privat et al, SOSPI 14-16, rue de la Baume, F-75008 Paris (FR)**

ACTORUM AG

## Description

La présente invention a trait à un bac alimentaire ayant un fond sensiblement rectangulaire et des parois évasées se terminant par une ouverture sensiblement rectangulaire et comportant à sa partie supérieure un rebord horizontal de forme extérieure rectangulaire entourant l'ouverture du bac et une arête verticale prolongeant les parois audessus du rebord ledit bac étant muni d'un couvercle comportant d'une part un rebord horizontal et d'autre part une arête verticale comportant plusieurs épaulements qui coopèrent avec l'arête du bac pour que, dans une première position, le couvercle soit en position haute, avec le bas de l'arête du couvercle écartée du rebord du bac et dans une seconde position, le couvercle soit en position basse.

Un tel bac est décrit dans le document US-A 1 9478 382.

Dans le bac connu on cherche à obtenir une fermeture hermétique en disposant sur le rebord du bac un anneau élastique et en appuyant sur le couvercle de façon que les épaulements du couvercle viennent s'encliqueter au-dessous d'une couronne extérieure située à la partie supérieure du rebord du lac.

On a remarqué que pour assurer une bonne conservation des produits dans le bac il faut, suivant leur nature, soit une très légère aération, soit une aération plus importante.

Ainsi les légumes frais ou cuits demandent une légère aération alors que pour les viandes crues une aération plus importante est nécessaire.

Le bac selon l'invention permettant avec un seul couvercle d'assurer ces deux types d'aération est caractérisé en ce que l'arête verticale du couvercle est disposée en dessous du rebord et vient s'emboîter autour de l'arête verticale du bac, l'arête verticale du bac ayant une hauteur voisine de celle du couvercle en ce que dans la seconde position le bas de l'arête du couvercle est au contact ou voisin du rebord du bac, et permet une faible aération et en ce que dans la première position l'arête du couvercle est écartée de l'arête du bac pour permettre une aération importante.

Ainsi lorsque le couvercle est dans sa première position il se produit une circulation d'air importante entre les deux arêtes. Par contre lorsque le couvercle est dans sa seconde position, il ne se produit qu'une légère circulation d'air due aux fuites entre l'arête du couvercle et le rebord du bac et entre l'arête du bac et le couvercle.

Selon une réalisation de l'invention, l'arête du bac est munie d'encoches dans lesquelles viennent se loger les épaulements lorsque le couvercle est dans sa seconde position, lesdits épaulements étant posés sur le haut de l'arête du bac lorsque le couvercle est dans sa première position.

Selon un perfectionnement de l'invention la partie externe de l'arête du bac est munie de saillies hautes et de saillies basses et en ce que l'arête du couvercle est munie à sa partie basse de dents tournées vers l'intérieur, lesdites dents venant s'engager sous les saillies hautes lorsque le couvercle est dans sa première position et sous les saillies basses lorsque le couvercle est dans sa seconde position.

Il est ainsi possible de fixer le couvercle sur le bac.

Selon une variante de réalisation l'arête du bac alimentaire est munie sur sa partie externe de saillies hautes et de saillies basses, les épaulements étant posés sur les saillies hautes lorsque le couvercle est dans sa première position et sur les saillies basses lorsque le couvercle est dans sa seconde position.

Selon cette variante l'arête du bac ne comporte pas d'encoches qui sont inesthétiques et constituent une gène lors du lavage du bac.

Selon un perfectionnement particulièrement avantageux de cette variante l'arête du couvercle est munie à sa partie basse de dents tournées vers l'intérieur, lesdites dents venant s'engager sous les saillies hautes lorsque le couvercle est dans sa première position et sous les saillies basses lorsque le couvercle est dans sa seconde position.

Ainsi on utilise les mêmes saillies pour servir de support aux épaulements et pour fixer le couvercle sur le bac.

Selon un perfectionnement de l'invention la face inférieure du couvercle est munie d'une nervure verticale parallèle à l'arête verticale, ladite nervure servant à bloquer l'eau de condensation, empêchant une étanchéité éventuelle due à l'eau de condensation pouvant résider entre les nervures du bac et le couvercle quand ce dernier est en position basse, ainsi qu'une deshydratation trop rapide des aliments stockés, lorsque le couvercle est en position aération importante.

Selon un autre perfectionnement de l'invention la face supérieure du couvercle comporte un renflement faisant le tour du couvercle et interrompu en un point, ledit renflement étant disposé selon un rectangle de dimensions supérieures au fond du bac, mais de dimensions comprises entre celles de l'arête et de la nervure situées sur la face inférieure du couvercle permettant aussi de poser couvercle sur couvercle et bac sur couvercle.

Ainsi il est possible d'une part d'emboîter les divers bacs les un dans les autres et d'autre part d'empiler bac sur couvercle ainsi que couvercle sur couvercle.

La présente invention sera mieux comprise à la lumière de la description qui va suivre dans laquelle:

La fig. 1 représente le bac alimentaire selon l'invention avec le couvercle en position aération importante.

Les fig. 2 et 3 et 4 représentent des vues agrandies de parties de la figure 1.

La fig. 5 représente une vue de dessus du bac alimentaire avec le couvercle en position aération importante.

La fig. 6 représente une vue de dessus du bac lorsqu'on fait passer le couvercle de la position représentée sur la figure 5 à la position représentée sur la figure 7.

La fig. 7 représente une vue de dessus du bac avec le couvercle en position faible aération.

La fig. 8 représente le bac alimentaire avec le couvercle en position faible aération.

Les fig. 9 à 11 représentent des vues agrandies de parties de la figure 8.

La fig. 12 représente une variante du bac selon l'invention avec le couvercle en position aération importante.

Les fig. 13 et 14 représentent des vues agrandies de parties de la figure 12.

La fig. 15 représente une vue de dessus de la variante du bac avec le couvercle en position aération importante.

La fig. 16 représente une vue de dessus du bac lorsqu'on fait passer le couvercle de la position représentée sur la figure 15 à la position représentée sur la figure 17.

La fig. 17 représente une vue de dessus de la variante du bac avec le couvercle en position faible aération.

La fig. 18 représente un détail de la figure 15.

La fig. 19 représente un détail de la figure 17.

La fig. 20 représente la variante du bac avec le couvercle en position faible aération.

Les fig. 21 et 22 représentent des vues agrandies de parties de la figure 20.

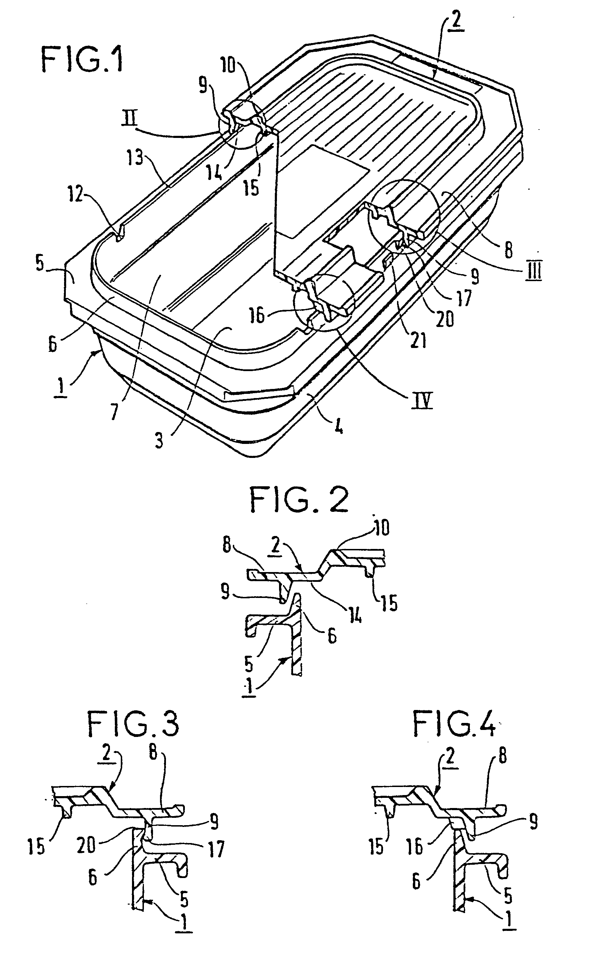

Le bac 1 (voir figure 1) est muni d'un couvercle 2.

Le bac 1 comporte un fond plat 3 de forme rectangulaire dont les coins sont arrondis ainsi que des parois 4 allant en s'évasant à partir du fond.

La partie supérieure des parois 4 est entourée d'un rebord horizontal 5. Les parois 4 sont prolongées par une arête verticale 6 délimitant une ouverture 7 de forme rectangulaire aux coins arrondis.

Le couvercle 2 comporte un rebord 8 qui est juste à l'aplomb du rebord 5 lorsque le couvercle 2 est posé sur le bac 1.

La face inférieure 14 du couvercle 2 est sensiblement plane et est munie d'une arête verticale 9 de hauteur sensiblement égale à la hauteur de l'arête 6 et qui s'emboîte autour de l'arête 6 lorsque le couvercle est posé sur le bac.

La face inférieure 14 comporte également une nervure 15 parallèle à l'arête 9 et écartée par rapport à elle vers l'intérieur, qui sert à bloquer l'eau de condensation qui se forme sur la face inférieure et dont la hauteur est inférieure à celle de l'arête 9.

Le couvercle 2 est muni à sa partie supérieure d'un renflement 10 qui fait le tour du couvercle et qui est disposé selon un rectangle de dimensions supérieures aux dimensions du fond 3 du bac 2 et de la nervure 15, mais de dimensions inférieures à l'arête 9 située sur la face inférieure du couvercle 2.

Le renflement 10 est interrompu dans un angle pour faciliter l'égouttage du couvercle 2.

Ainsi on peut poser le fond du bac sur un couvercle 2 car le fond est maintenu à l'intérieur du renflement. On peut également empiler un couvercle sur un autre couvercle le renflement 10 du couvercle inférieur venant se loger entre l'arête 9 et la nervure 15 du couvercle supérieur.

L'arête verticale 6 du bac 1 est munie de quatre encoches 12 disposées au voisinage des extrémités des grands côtés 13 de l'ouverture 7.

L'arête 6 est munie sur la partie externe de chaque grand côté d'une saillie haute 20 disposée au voisinage du haut de ladite arête 6 et d'une saillie basse 21 disposée au voisinage du bas de ladite arête 6.

Les saillies 20 et 21 sont disposées de part et d'autre du plan médian perpendiculaire aux grands côtés de l'ouverture et à la même distance de ce plan.

L'arête verticale 9 est munie de quatre épaulements 16 au voisinage de sa partie supérieure. Cette arête 9 comporte deux dents 17 tournées vers l'intérieur et symétriques par rapport au plan de symétrie longitudinal.

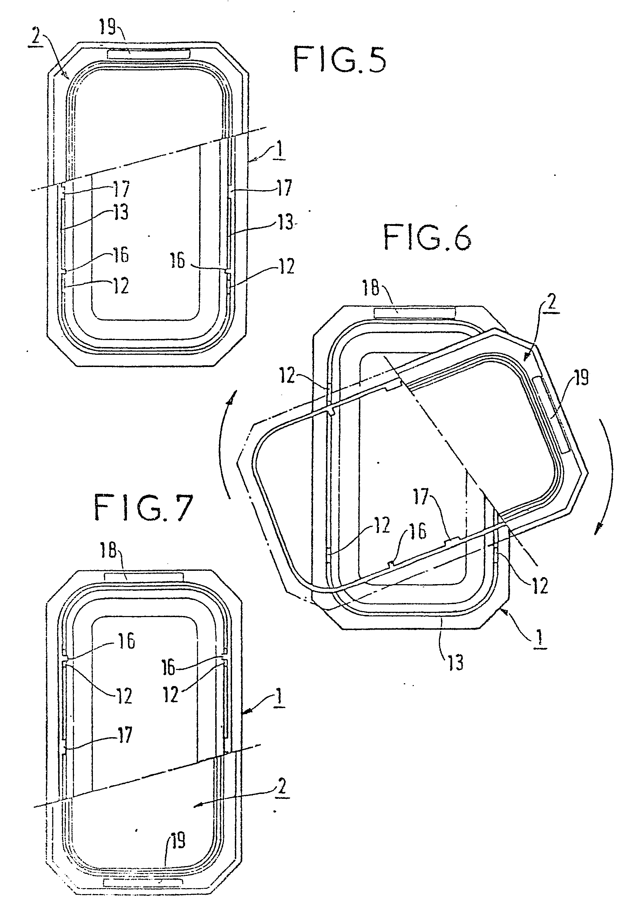

Dans une première position représentée aux figures 1 et 5, les épaulements 16 sont posés sur la tranche de l'arête 6 (voir figure 4). Les dents 17 sont enclipsées sous les saillies hautes 20 (voir figure 3).

L'arête 6 a de préférence sa paroi externe légèrement inclinée vers l'intérieur en allant vers le haut du bac tandis que l'arête 9 a sa paroi interne parallèle à la paroi externe de l'arête 6.

Ainsi lorsque le couvercle 2 est dans sa première position (position haute) il y a un passage d'air relativement important entre les arêtes 6 et 9 (voir figure 2).

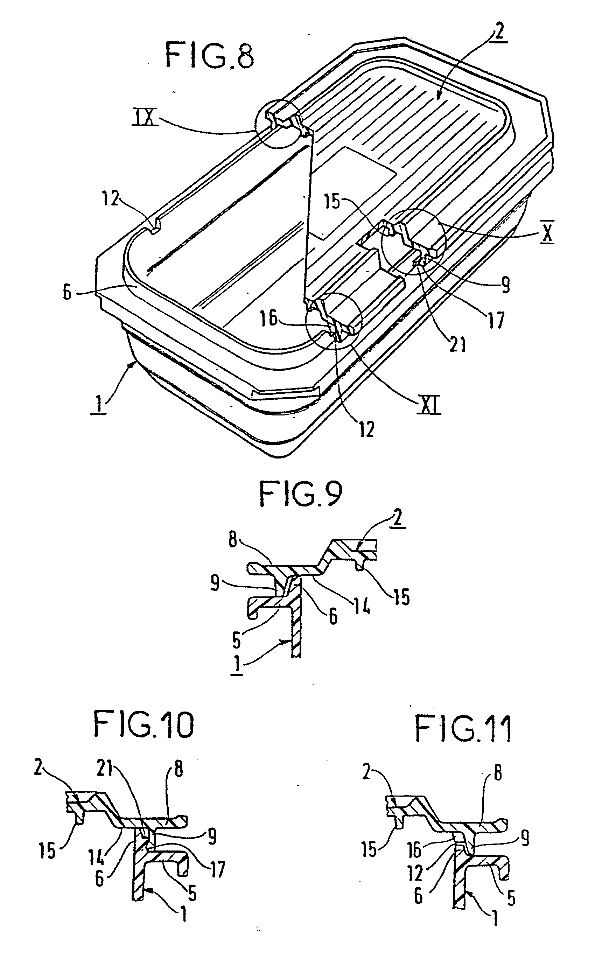

Quand on tourne le couvercle 2 de 180° il occupe une seconde position (voir figures 7 et 8).

Dans cette seconde position (position basse) les épaulements 16 sont dans les encoches 12 (voir figure 10). L'arête 9 est au contact du rebord 5 et/ou la tranche de l'arête 6 est au contact de la face inférieure 14 du couvercle 2 si bien que seules de faibles fuites d'air peuvent passer.

Dans cette position les dents 17 sont enclipsées sous les saillies basses 21. L'arête 6 et l'arête 9 possèdent une certaine élasticité, ce qui permet d'enclipser et de déclipser le couvercle 2.

Pour distinguer entre les deux positions on met un repère 18 sur le bac 1 et un repère 19 sur le couvercle (voir figure 5, 6, 7).

Dans la seconde position les repères 18 et 19 sont opposés (voir figure 7).

Dans la variante de réalisation représentée aux figures 12 à 22 les éléments correspondants à ceux de la réalisation représentée aux figures 1 à 11 sont référencés par les mêmes chiffres.

L'arête verticale 6 du bac 1 ne comporte pas d'encoches mais quatre saillies hautes 20' et quatre saillies basses 21' disposées sur les grands côtés 13. Les saillies basses 21' d'un côté 13 encadrent les saillies hautes 20' alors que sur l'autre côté ce sont les saillies hautes 20' qui encadrent les saillies basses 21'.

L'arête verticale 9 du couvercle 2 comporte quatre épaulements 16' et quatre dents 17' situées en dessous des épaulements 16′ en bas de ladite arête 9 et dirigées vers l'intérieur.

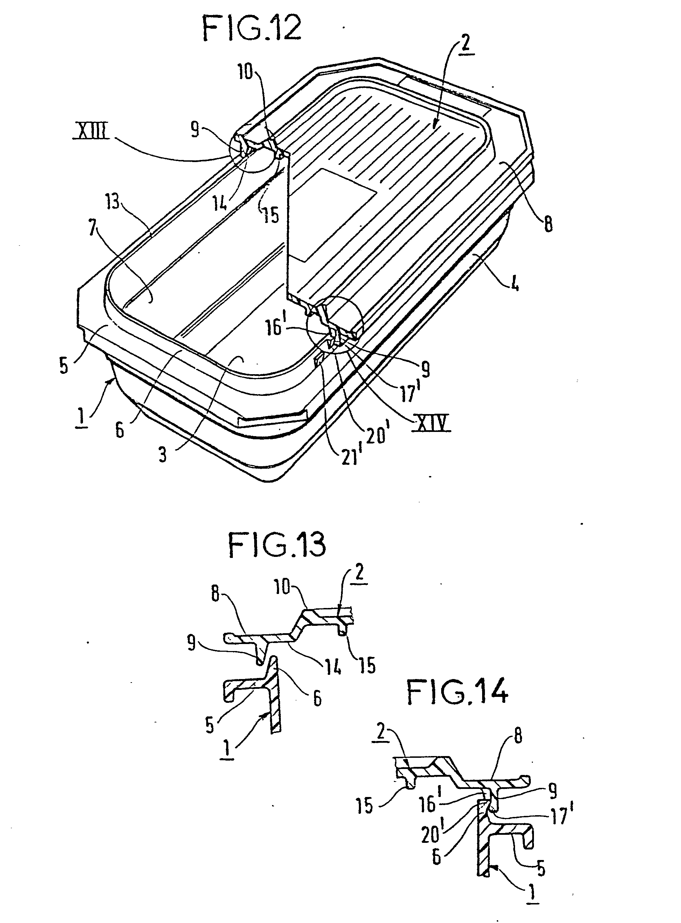

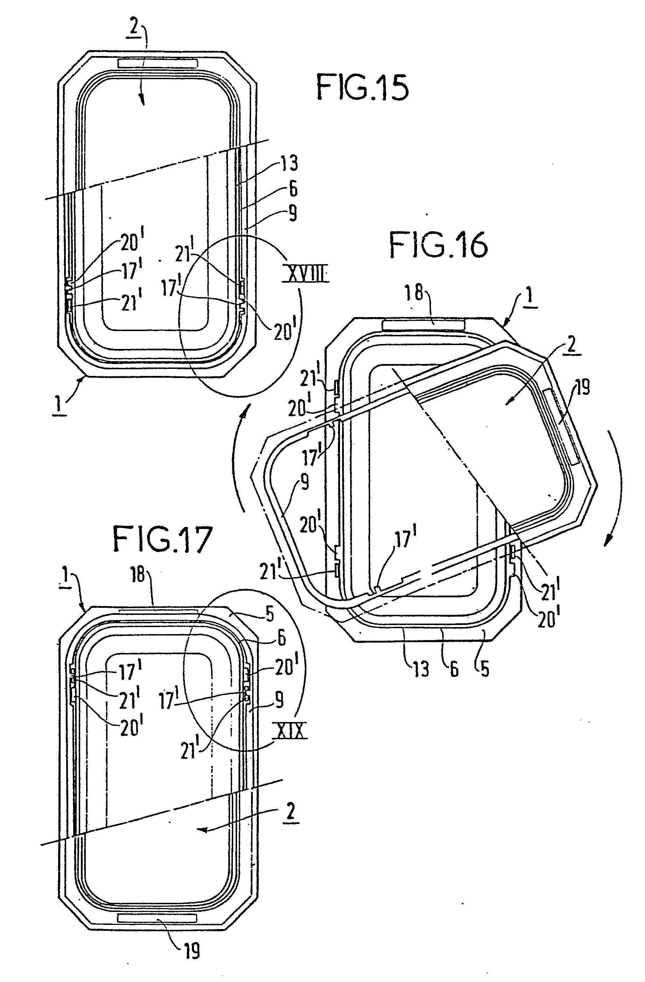

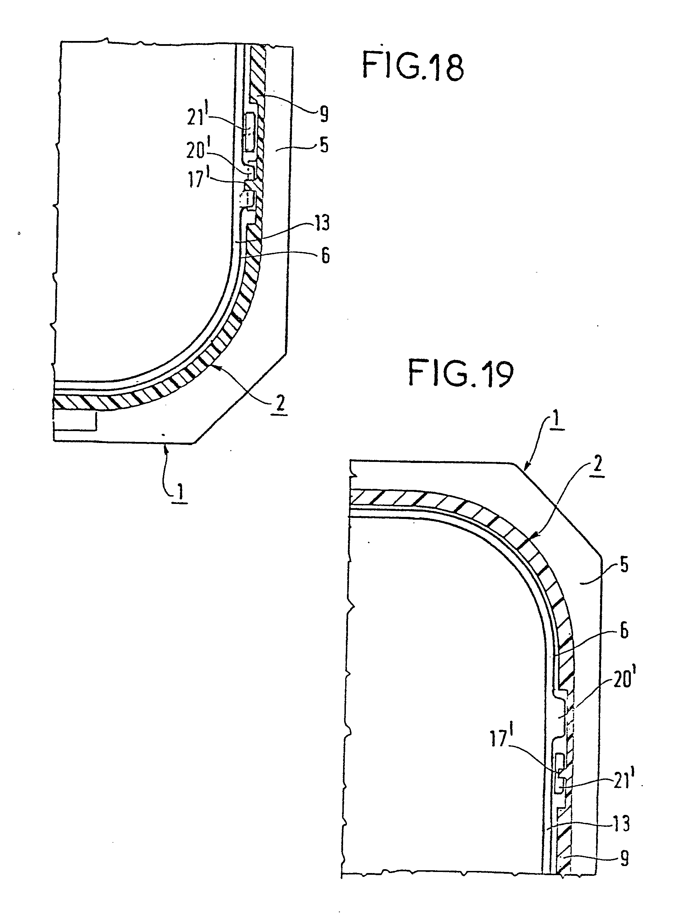

Ainsi dans une première position (position haute, figures 12 et 15) les épaulements 16′ sont posés sur les saillies hautes 20′ et les dents 17′ sont engagées sous ces saillies 20′ fixant le couvercle 2 au bac 1 (voir figures 14 et 18).

Le passage entre les arêtes 6 et 9 permet une bonne aération (voir figure 13).

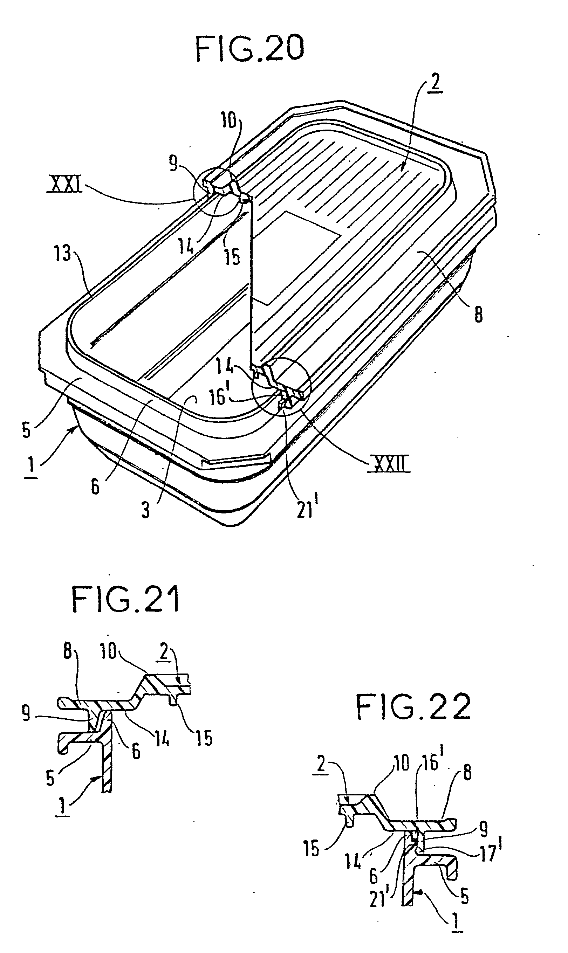

Quand on tourne le couvercle de 180° les épaulements 16′ viennent se poser sur les saillies basses 21′ et les dents 17′ sont engagées sous ces saillies 21′ (voir figures 19, 20 et 22) fixant le couvercle 2 par clipsage dans sa position basse (voir figures 17 et 19).

Dans cette seconde position le bas de l'arête 9 du couvercle 2 vient au contact du rebord 5 et/ou le haut de l'arête 6 du bac 1 vient au contact de la face inférieure 14 du couvercle 2 ne laissant passer que des fuites d'air assurant ainsi une faible aération (voir figure 21).

Sur la figure 16 on a représenté le couvercle 2 pendant sa rotation.

Le bac décrit est rectangulaire mais il pourrait évidemment être carré. Dans ce cas on pourrait choisir une seconde position (aération légère) qui s'obtiendrait à partir de la première (aération importante) par une rotation de 90°.

**Revendications**

1. Bac alimentaire (1) ayant un fond (3) sensiblement rectangulaire et des parois (4) évasées se terminant par une ouverture (7) sensiblement rectangulaire et comportant à sa partie supérieure un rebord horizontal (5) de forme extérieure rectangulaire entourant l'ouverture (7) du bac (1) et une arête verticale (6) prolongeant les parois (4) au-dessus du rebord (5) ledit bac (1) étant muni d'un couvercle (2) comportant d'une part un rebord horizontal (8) et d'autre part une arête verticale (9) comportant plusieurs épaulements (16, 16′) qui coopèrent avec l'arête (6) du bac (1) pour que, dans une première position, le couvercle (2) soit en position haute, avec le bas de l'arête (9) du couvercle (2) écartée du rebord (5) du bac (1) et dans une seconde position, le couvercle (2) soit en position basse, caractérisé en ce que l'arête verticale (9) du couvercle est disposée en dessous du rebord (8) et vient s'emboîter autour de l'arête verticale (6) du bac (1), l'arête verticale (6) du bac ayant une hauteur voisine de celle (9) du couvercle (2) et en ce que dans la seconde position le bas de l'arête (9) du couvercle (2) est au contact ou voisin du rebord (5) du bac (1), et permet une faible aération et en ce que dans la première position l'arête (9) du couvercle (2) est écartée de l'arête (6) du bac (1) pour permettre une aération importante.

2. Bac alimentaire selon la revendication 1, caractérisé en ce que l'arête (6) du bac (1) est munie d'encoches (12) dans lesquelles viennent se loger les épaulements (16) lorsque le couvercle (2) est dans sa seconde position, lesdits épaulements (16) étant posés sur le haut de l'arête (6) du bac (1) lorsque le couvercle (2) est dans sa première position.

3. Bac alimentaire selon la revendication 2, caractérisé en ce que la partie externe de l'arête (6) du bac (1) est munie de saillies hautes (20) et de saillies basses (21) et en ce que l'arête (6) du couvercle (1) est munie à sa partie basse de dents (17) tournées vers l'intérieur, lesdites dents (17) venant s'engager sous les saillies hautes (20) lorsque le couvercle (2) est dans sa première position et sous les saillies basses (21) lorsque le couvercle (2) est dans sa seconde position.

4. Bac alimentaire selon la revendication 1, caractérisé en ce que l'arête (6) du bac (1) est munie sur sa partie externe de saillies hautes (20′) et de saillies basses (21′), les épaulements (16′) étant posés sur les saillies hautes (20′) lorsque le couvercle (2) est dans sa première position et sur les saillies basses (21′) lorsque le couvercle (2) est dans sa seconde position.

5. Bac alimentaire selon la revendication 4, caractérisé en ce que l'arête (9) du couvercle (2) est munie à sa partie basse de dents (17′) tournées vers l'intérieur, lesdites dents (17′) venant s'engager sous les saillies hautes (20′) lorsque le couvercle (2) est dans sa première position et sous les saillies basses (21′) lorsque le couvercle (2) est dans sa seconde position.

6. Bac alimentaire selon l'une des revendications précédentes, caractérisé en ce que la face inférieure (14) du couvercle (2) est munie d'une nervure (15) située parallèlement et à l'intérieur de l'arête (9) du couvercle (2).

7. Bac alimentaire selon la revendication 6, caractérisé en ce que la face supérieure du couvercle (2) comporte un renflement (10) faisant le tour du couvercle (2) et interrompu en un point (11), ledit renflement (10) étant disposé selon un rectangle de dimensions supérieures au fond (3) du bac (1), mais de dimensions comprises entre celles de l'arête (9) et de la nervure (15) situées sur la face inférieure (14) du couvercle (2) permettant aussi de poser couvercle sur couvercle et bac sur couvercle.

**Patentansprüche**

1. Lebensmittelbehälter (1) mit einem im wesentlichen rechteckigen Boden (3) und bauchigen Wänden (4), die in eine im wesentlichen rechteckige Öffnung (7) übergehen, wobei der Behälter an seinem oberen Teil einen horizontalen Kragen (5) von äusserer rechteckiger Form besitzt, welcher die Öffnung (7) des Behälters (1) umgibt, sowie eine senkrechtstehende Kante (6), welche die Wände (4) bis oberhalb des Kragens (5) des Behälters erweitert und der Behälter (1) mit einem Deckel (2) ausgestattet ist, der zum einen einen horizontalen Kragen (8) und zum anderen eine senkrechtstehende Kante (9) mit mehreren Schultern (16, 16′) aufweist, welche mit der Kante (6) des Behälters (1) derart zusammenwirken, dass sich in einer ersten Position der Deckel (2) in einer Hochlage mit vom Kragen (5) des Behälters (1) abgehobener Unterseite der Kante (9) befindet, und dass sich in einer zweiten Position der Deckel (2) in der Tieflage befindet, dadurch gekennzeichnet, dass die senkrechte Kante (9) des Deckels unterhalb des Kragens (8) angeordnet ist und sich um die senkrechte Kante (6) herumlegt, wobei diese Kante des Behälters von ungefähr gleicher Höhe ist wie die (9) des Deckels (2), und dass in der zweiten Position die Unterseite der Kante (9) des Deckels (2) den Kragen (5) des Behälters berührt oder ihr nahesteht und eine schwache Belüftung erlaubt, und dass in der ersten Position die Kante (9) des Deckels (2) von der Kante (6) des Behälters soweit absteht, dass eine starke Belüftung ermöglicht wird.

2. Lebensmittelbehälter nach Anspruch 1, dadurch gekennzeichnet, dass die Kante (6) des Behälters mit Aussparungen (12) versehen ist, in welche die Schultern (16) in der zweiten Position des Deckels (2) eingreifen, während die Schultern (16) auf der Oberseite (6) des Behälters (1) aufsitzen, wenn sich der Deckel (2) in seiner ersten Position befindet.

3. Lebensmittelbehälter nach Anspruch 2, dadurch gekennzeichnet, dass die Aussenseite der Kante (6) des Behälters mit hohen (20) und niedrigen Vorsprüngen (21) ausgestattet ist, und dass die Kante (6) des Deckels (1) an ihrer Unterseite mit nach innen gerichteten Zähnen (17) versehen ist, welche unter die hohen Vorsprünge (20) rücken, wenn sich der Deckel (2) in seiner ersten Position befindet und unter die niedrigen Vorsprünge (21), wenn sich der Deckel (2) in der zweiten Position befindet.

4. Lebensmittelbehälter nach Anspruch 1, dadurch gekennzeichnet, dass die Kante (6) des Behälters (1) auf seiner Aussenseite mit hohen (20') und niedrigen Vorsprüngen (21') ausgestattet ist, und sich die Schultern (16') auf die hohen Vorsprünge (20') setzen, wenn sich der Deckel (2) in seiner ersten Position befindet, und auf die niedrigen Vorsprünge (21'), wenn sich der Deckel in einer zweiten Position befindet.

5. Lebensmittelbehälter nach Anspruch 4, dadurch gekennzeichnet, dass die Kante (9) des Deckels (2) an ihrer Unterseite mit nach innen gerichteten Zähnen (17') ausgestattet ist, die unter die hohen Vorsprünge (20') rücken, wenn sich der Deckel in seiner ersten Position befindet und unter die niedrigen Vorsprünge (21'), wenn sich der Deckel (2) in seiner zweiten Position befindet.

6. Lebensmittelbehälter nach einem der vorhergehenden Ansprüche, dadurch gekennzeichnet, dass die Unterseite (14) des Deckels (2) mit einer Rippe (15) ausgestattet ist, welche parallel und innerhalb der Kante (9) des Deckels (2) verläuft.

7. Lebensmittelbehälter nach Anspruch 6, dadurch gekennzeichnet, dass die Oberseite des Deckels (2) eine Verstärkung (10) aufweist, welche um den Deckel (2) herum verläuft und an einem Punkt (11) unterbrochen ist, wobei die Verstärkung als Rechteck von grösseren Abmessungen als die des Bodens (3) des Behälters (1) ausgebildet ist, die jedoch zwischen denen der Kante (9) und der Rippe (15) an der Unterseite (14) des Deckels (2) liegen und das Aufsetzen von Deckel auf Deckel und von Behälter auf Deckel gestatten.

## Claims

1. A food container (1) having a substantially rectangular bottom (3) and flared walls (4) terminating in a substantially rectangular opening (7) and including a horizontal rim (5) near the top thereof which is outwardly rectangular in shape and which surrounds the opening (7) to the container (1), and a vertical rib (6) extending the walls (4) above the rim (5), said container (1) being provided with a cover (2) including firstly a horizontal rim (8) and secondly a vertical rib (9) including a plurality of shoulders (16, 16') for co-operating with the container rib (6) in such a manner that in a first position the cover (2) is in a high position with the bottom of the cover rib (9) being raised above the container rim (5), characterized in that the vertical rib (9) of the cover is disposed beneath the rim (8) and engages around the vertical rib (6) of the container (1), with the vertical rib (6) of the container having substantially the same height as the vertical rib (9) of the cover (2), in that in the second position the bottom of the cover rib (9) comes close to or into contact with the container rim (5), enabling slight ventilation, and in that in the first position, the cover rib (9) is at a distance from the container rib (6) enabling considerable ventilation.

2. A food container according to claim 1, characterized in that the container rib (6) is fitted with notches (12) in which the shoulders (16) are received when the cover (2) is in its second position, said shoulders (16) resting on the top of the container rib (6) when the cover (2) is in its first position.

3. A food container according to claim 2, characterized in that the outside of the container rib (6) is provided with upper and lower projections (20, 21) and in that the cover rib (6) is provided with inwardly directed teeth (17) near the bottom thereof, said teeth (17) engaging under the upper projections (20) when the cover (2) is in its first position and under the lower projections (21) when the cover is in its second position.

4. A food container according to claim 1, characterized in that the container rib (6) has upper and lower outwardly directed projections (20', 21'), with the shoulders (16') resting on the upper projections (20') when the cover (2) is in its first position and on the lower projections (21') when the cover (2) is in its second position.

5. A food container according to claim 4, characterized in that the cover rib (9) has inwardly directed teeth (17') near the bottom thereof, said teeth (17') engaging under the upper projections (20') when the cover (2) is in its first position and under the lower projections (21') when the cover (2) is in its second position.

6. A food container according to any preceding claim, characterized in that the bottom face (14) of the cover (2) is provided with a second rib (15) which is situated parallel to an inside the first rib (9).

7. A food container according to claim 6, characterized in that the top face of the cover (2) includes a raised portion (10) surrounding the cover (2) and including a gap at one point (11), said raised portion (10) being disposed around a rectangle which is larger than the bottom (3) of the cover (1) but which lies between the size of the first rib (9) and the second rib (15) on the bottom (14) face of the cover (2), thereby enabling covers to be stacked on one another and also enabling containers to be stacked on covers.

FIG.1

FIG. 2

FIG.3

FIG.4

FIG.5

FIG.6

FIG.7

FIG.8

FIG.9

FIG.10

FIG.11

## FIG.12

## FIG.13

## FIG.14

# FIG.15

# FIG.16

# FIG.17

FIG.18

FIG.19

# FIG.20

# FIG.21

# FIG.22